# EUROPEAN PATENT SPECIFICATION

(11) **EP 4 265 123 B1**
(45) Date of publication and mention of the grant of the patent: **25.09.2024**
(21) Application number: 22169496.1
(22) Date of filing: 22.04.2022
(51) Int. Cl.: A23L 3/16, A23L 3/22, A23L 3/28

(54) **UV-TREATMENT UNIT**
UV-BEHANDLUNGSEINHEIT
UNITÉ DE TRAITEMENT UV

(43) Date of publication of application: 25.10.2023
(73) Proprietor: Alfa Laval Corporate AB, 221 00 Lund (SE)
(72) Inventor: HOFFSTEIN, Magnus, SE-253 41 VALLÅKRA (SE); WICTOR, Clemens, SE-222 35 LUND (SE)
(74) Representative: Alfa Laval Attorneys

(56) References cited:
- EP-A1- 1 464 342
- WO-A1-2019/057257
- WO-A1-2021/063462
- US-A1- 2008 305 018

## Description

### Field of the Invention

The present invention relates to a UV-treatment unit for reducing the amount of active or living micro-organisms in a liquid food product and to a system for reducing the amount of active or living micro-organisms in a liquid food product as defined in the appended claims.

### Background of the Invention

Conventional pasteurization, which includes heat treatment, can be used for at least partly eliminating pathogens and thereby extending the shelf life of a food product. In the pasteurization, the heat treatment leads to neutralization or deactivating microorganisms in foods and beverages. The pasteurization process also includes a cooling step, whereby the process is energy demanding. Time and temperature used depends on multiple factors like desired level or deactivation, type of fluid, types of microbes, etc. For example, when milk is pasteurized, not all microorganisms are destroyed. Therefore, the pasteurized milk must be subsequently refrigerated.

Due to requirements relating to reduced energy consumption, use of UV-light for neutralizing micro-organisms has been investigated as an alternative to pasteurization process. Especially, the use of UV-C-light has been studied as an alternative to traditional pasteurization since it does not require heating of the food product and subsequent cooling. UV-C is known to damage the DNA of microbes, living and spores, which is the mechanism behind the deactivation.

However, the light can also cause non-desirable effects on the food itself, e.g. off-flavors. This is caused by other wavelengths in the UV-C spectrum. These wavelengths should be filtered away to avoid these non-desirable side effects. By applying a right filter, the food can be exposed to higher doses of UV-C without negative impact on food quality. Higher doses of the DNA destroying wavelengths mean that shelf life of the treated product may be longer than what would be possible to achieve without filter. Thus, there is a need within the field of optimizing the killing or deactivation of bacteria and viruses (i.e. pasteurization or sterilization) to avoid or lower oxidation of the liquid product, since the oxidation of the liquid product may result in a bad flavor/taste of the food product.

A known UV-C pasteurization method is disclosed by WO 2019/057257 A1. However, there still is a need to improve the existing reactors so that they are better suited for high flow rates and opaque liquids.

### Summary of the Invention

As mentioned above, there is still room for improvements in the field of pasteurization of liquid food. Especially, there is a need to provide a reactor or treatment unit adapted for high flow rates and opaque liquids. There is also a need for flexible units that can be adapted to different food processes. It is a further desire to reduce energy consumption in the pasteurization of liquid food.

It is thus an objective of the present invention to provide a treatment unit and a system for reducing reducing the amount of active or living micro-organisms in a liquid food product, which is adapted for high flow rates and opaque liquids, which can be adapted for different food processes, and which may reduce the energy requirement in pasteurization processes. The objectives above are attained by the UV-treatment unit and system of the present invention as defined in the appended claims.

Accordingly, the objects are attained by a UV-treatment unit for reducing the amount of active or living micro-organisms in a liquid food product and comprising a liquid inlet and a liquid outlet; at least one set of translucent liquid tubes fluidly connected to the inlet and the outlet and defining a flow channel for the liquid, wherein each tube has shape providing at least two turns for the flow direction between the inlet and the outlet; one or more UV-light sources, which are configured to emit light in a wavelength range between 180-300 nm towards at least one side of the set of liquid tubes. The number of the tubes in the set of tubes for the liquid may be adapted to the process, and therefore it can be assured that the treatment is adapted to the flow rates of the process and thus, also high flow rates may be treated. The shape providing the turns may comprise bends or elbows that change the principal direction of the flow. The flow direction may be changed for example from towards left to towards right or from towards back to towards forth. The bends may be arranged in a mirror-imaged way to turn the flow direction in a mirror-imaged way, e.g. to opposite directions. By providing the tubes with a shape that changes the flow direction at least twice between the inlet and outlet ends of the tubes, turbulence is provided to the liquid whereby the liquid can be sufficiently treated with the UV-C-radiation and micro-organisms can be inactivated.

The unit may further comprise an optical filter placed between the UV-light sources and the set of liquid tubes. The filter may be configured to prevent wavelengths of more than 300 nm to pass through the filter. In this way it is possible to use UV-C-emitting lamps, which in addition to UV-C-light having a wavelength between 200 and 280 nm, emit also light outside this range. The filter may be adapted to filter light above 280 nm.

The UV-treatment unit may comprise a tube frame structure, which comprises or is fluidly connected to the liquid inlet and outlet, and which is configured to support the set of translucent liquid tubes in fluid connection with the inlet and the outlet. The frame structure may be adapted to be connectable and/or mountable to other frame structures of the unit, whereby a modular structure for the unit can be obtained.

In an analogous manner as the tube frame, the UV-treatment unit may comprise a lamp frame configured to support the UV-light sources. The tube frame structure and the lamp frame structure may be mountable and/or connectable to each other to provide the unit. The tube frame structure can be sandwiched between two lamp frame structures, such that the UV-light sources, i.e. lamps, emit light towards opposing sides of the liquid tubes. In this way it can be assured that the fluid can be irradiated with the UV-C-light in an efficient manner.

Each liquid tube may have a wave shape resembling a zigzag, sinus curve or serpentine shape. The wave shape in the present context thus includes the zigzag and serpentine shape. The wave shape in the present context contains bends, elbows or similar between two substantially straight or nearly straight tube portions. The bends or turns change the principal flow direction. Spiral wave shape is excluded. Other shapes having a continuous arch shape without intermediate straight portions between two turns or bends may be excluded.

The wavelength and amplitude of the waves can be constant or vary along the length of the tube. In this way it is possible to adapt the turbulence in the liquid. The amplitude of the waves can be from 0.1 to 2 times the wavelength.

Each tube may have an inner tube diameter between 3 mm and 15 mm. Therefore, sufficient flow in each tube can be provided.

The UV-light sources may be arranged in a parallel manner along the extension of the tubes between the inlet end and the outlet end of the tubes.

A reflective material may be sandwiched between the UV-light sources. In this way the radiation effectivity may be increased. The one or more light sources may be selected from a mercury-vapor lamp, xenon lamp, laser and/or a light emitting diode (LED) or combinations thereof. The one or more light sources may comprise a low-pressure germicidal lamp, such as a low- pressure mercury-vapor lamp.

The one or more filters may be optical filters selected from bandpass filters, notch filters, or a combination of both. By using a filter or filters, undesired wavelengths can be prevented or blocked from reaching the liquid food in the tubes. In this way off-flavors can be avoided.

The present invention additionally relates to a UV-treatment system for reducing the amount of active or living micro-organisms in a liquid food product comprising a liquid food tank for untreated liquid food, a feed supply line between the tank and a liquid supply pump, a liquid inlet line fluidly connected to an inlet of a UV-treatment unit according as defined above and a liquid outlet line connected to an outlet of the UV-treatment unit. In the system, a recirculation line is connected to the outlet line and to the inlet line downstream of the pump. In this way it is possible to control the flow through the treatment unit also in addition to or without using the pump speed for the regulation.

The recirculation line may be fluidly connected to or comprise a manually or electrically controllable flow valve.

The system may be electrically controllable and may further comprise a control unit configured to control the pump and/or the flow valve to adjust the flow through the UV-treatment unit. The control unit may be configured to control the flow valve to provide recirculation of the liquid food product such that the flow rate through the unit is larger than the flow rate provided by the pump.

Further aspects and advantages of the present invention are described in the following detailed description.

### Brief description of the Drawings

The above, as well as additional objects, features and advantages of the present inventive concept, will be better understood through the following illustrative and non-limiting detailed description, with reference to the appended drawings. In the drawings like reference numerals will be used for like elements unless stated otherwise.
Figure 1a shows in a side view an example of a translucent liquid flow tube having a shape with several turns in a longitudinal-transversal plane of the tube;
Figure 1b shows in a side view a set of translucent liquid flow tubes comprised in a first version (I) of a tube frame having a liquid inlet and outlet;
Figure 2a shows in a perspective explosion view an embodiment of the UV-treatment unit comprising the tube frame and the tubes of Fig. 1b and a lamp frame comprising UV-lamps arranged horizontally and in parallel;
Figure 2b shows in a perspective explosion view another embodiment of the UV-treatment unit comprising the tube frame and the tubes of Fig. 1b with UV-lamps arranged in a lamp frame vertically and in parallel;
Figure 3a shows a set of liquid tubes arranged in a side-by-side parallel manner;
Figure 3b shows in a perspective explosion view the set of liquid tubes of Fig. 3a arranged in a UV-treatment unit such that the turns face the lamps comprised in a lamp frame;
Figure 3c shows a side view of a further variant of the arrangement of the lamps in the lamp frame in relation to the tubes;
Fig. 4a shows a side view of a lamp frame comprising UV-lamps in a horizontal orientation and a reflector arranged between the lamps;
Fig. 4b shows a partial perspective view of the arrangement in Fig. 4a;
Fig. 5a shows in a partial perspective explosion view a UV-treatment unit according to an embodiment comprising LED UV-lamps.
Fig. 5b shows two partial magnified views of the LED lamp arrangement in the UV-treatment unit of Fig. 5a.
Fig. 6 shows a flow scheme for an example UV-treatment system in which the UV-treatment unit of the disclosure can be used.

### Detailed Description

The present disclosure relates to a UV-treatment unit for reducing the amount of active or living micro-organisms in a liquid food product. Micro-organisms found in liquid food products may be present due to contamination during the processing of the liquid food product. Micro-organisms may include bacteria, viruses, protozoa, molds, yeasts, and algae. The reduction of the number of micro-organisms is also referred to as neutralization, deactivation, or sterilization. When the micro-organisms are radiated at a wavelength including wavelengths 180-300 nm, which include the most effective wavelengths within UV-C spectra (100-280 nm), the nucleic acids of the micro-organisms will absorb the UV-C radiation, which causes lethal mutations in the DNA. At wavelengths above 300 nm the germicidal effect is limited, but the risk for photo-oxidation may be increased. Therefore, lamps including the radiation within the range of 180-300 nm is desirable.

According to the present disclosure the reduction may be performed without a heating step with an optional cooling step in the process, whereby energy requirement of the process can be reduced. However, the reduction process may include heating and/or cooling steps, but the since the reduction of the microorganisms is ensured by means of the UV-radiation, the required energy amount may be reduced. When reducing the amount micro-organisms, not all the microorganisms are necessarily destroyed, whereby subsequent cooling of the product may be needed.

The liquid food product may be a dairy product, such as milk or a product containing milk, a plant-based liquid drinks or food products, fruit juices, tea, coffee, soups, or any other type of liquid food product.

According to an embodiment, the UV-treatment unit of the present disclosure may be used for the treatment of any other liquid food product containing pathogens, such as blood or blood containing liquid.

The liquid food product may be opaque or partly opaque, meaning that the product may have some degree or translucency, but is not fully translucent.

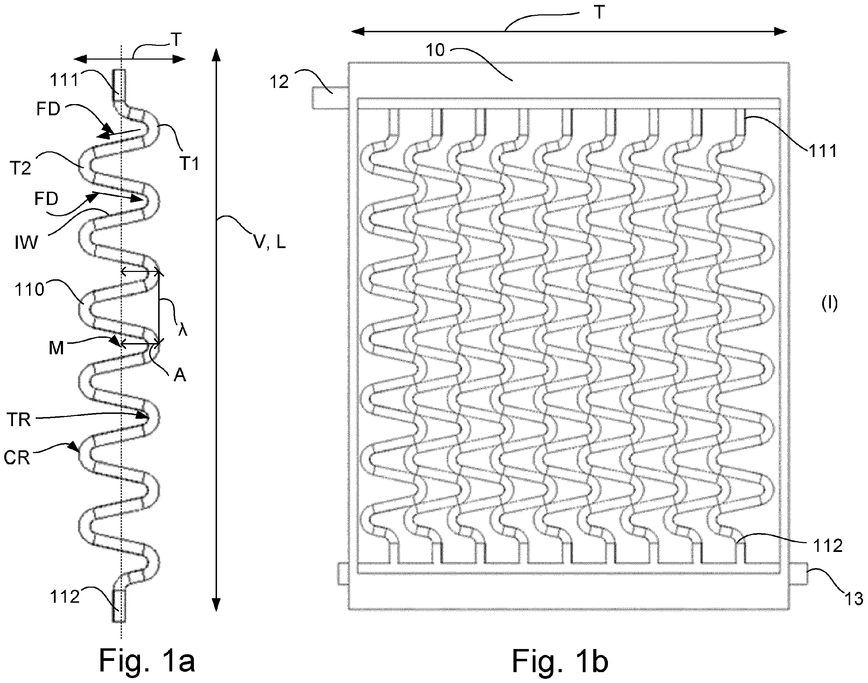

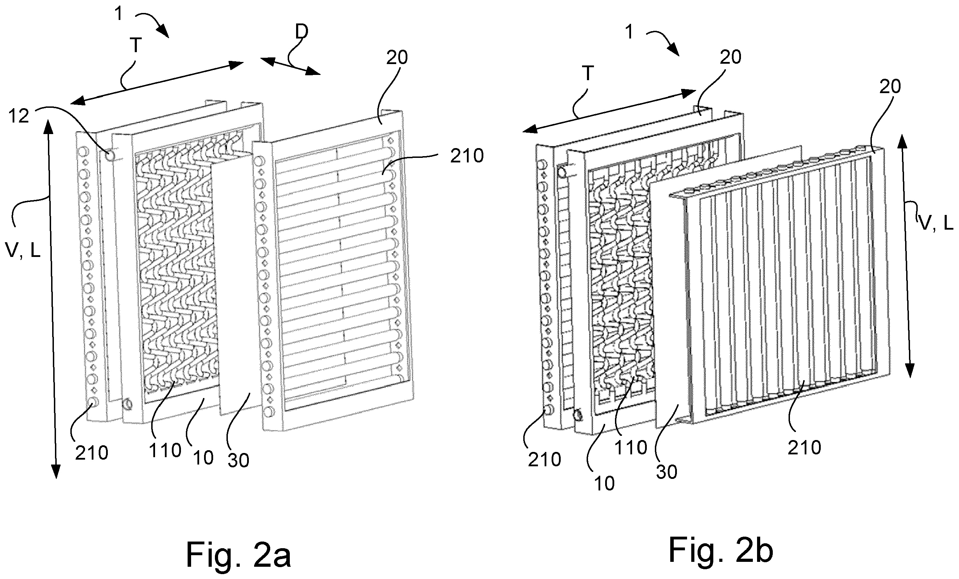

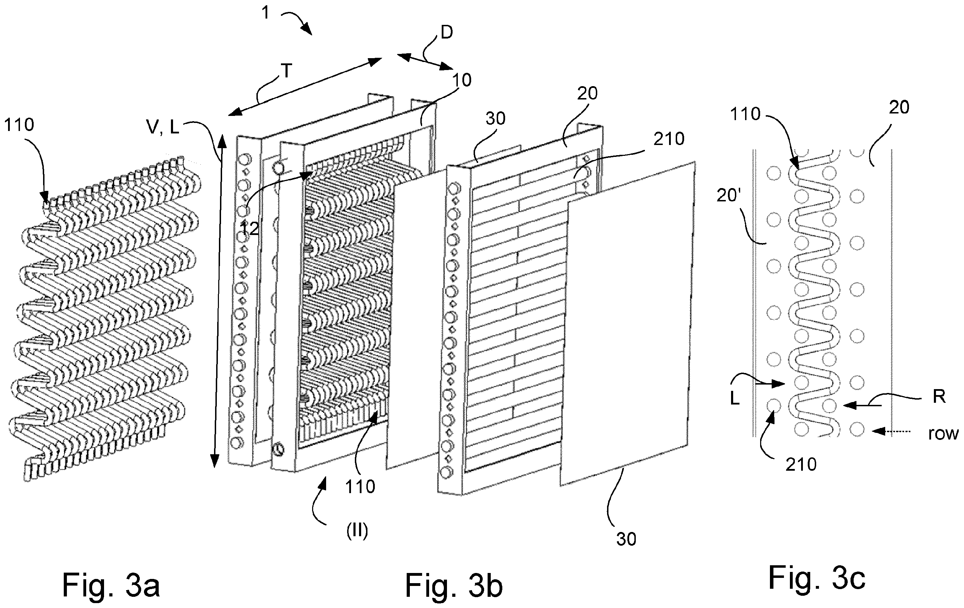

Variants of the UV-treatment unit 1 are schematically shown in Fig. 2a, 2b and 3b. Details of translucent liquid tubes 110 and variants how they can be arranged in a UV-treatment unit are shown in Fig. 1a and 1b, 2a, 2b and 3a-3c respectively, and reference is equally made to each of the drawings.

The UV-treatment unit 1 shown in Fig. 2a and 3b comprises a liquid inlet 12 through which liquid is supplied to a set of translucent liquid tubes 110, two of which are depicted with reference signs. The number of tubes 110 in this set of tubes is 9. The number of the tubes could however be more of less, depending on the shape and dimensions of the system and the tube frame 10. The inlet 12 may be positioned in a transversal direction in respect of the set of tubes, so that the liquid is supplied to an inlet end 111 of each tube in a substantially transversal direction. In the set, each of the tubes 110 has the inlet end 111 and an outlet end 112. The ends 111 and 112 can be placed in a vertical direction and thus perpendicular to the position of the inlet 12 as shown in the Fig. 1b, 2a, 2b, and 3b. This means that the liquid from the inlet 12 enters the tubes 110 in a direction which is perpendicular compared to the direction the inlet end 112 of the tube extends. In a similar manner, the outlet 13 may be positioned so that the liquid is supplied out from the tubes in a substantially transversal direction, and thus liquid exits the tubes 110 in a direction which is perpendicular compared to the direction the outlet end 112 of the tube extends.

Each of the tubes 110 defines a flow channel for the liquid and extends in a generally vertical direction (V). Each of the tubes has a shape providing at least two turns T1, T2, for the flow direction in a transversal direction between the inlet end 111 and the outlet end 112 of each tube 110, i.e. the flow direction FD illustrated in Fig. 1a is changed at least twice between the inlet end and the outlet end. The shape providing the turns may comprise bends or elbows that change the principal direction of the flow. The flow direction may be changed for example from towards left to towards right or from towards back to towards forth. The bends may be arranged in a mirror-imaged way to turn the flow direction in a mirror-imaged way, e.g. to opposite directions. As shown in Fig. 1a, the first turn T1 changes the direction of the flow towards left and the second turn T2 changes the flow direction towards the right.

As illustrated by Fig. 1a, the shape variations providing the change of the flow direction FD can be arranged in a plane defined by a vertical (V) extension of the tubes, which is also referred to as a longitudinal (L) extension of the tube 110, and a transversal (T) extension of the tube 110. Therefore, the flow direction FD can be altered in one plane defined by the longitudinal-transversal extensions of the tubes. The tube shape can thus be planar. Therefore, there is no or only minor shape variation in a plane defining a depth direction D of the tube 110 or the unit, as illustrated in Figure 2a. Thereby, the tube shape alters in the transversal and longitudinal extension. The extension of the tubes 110 in a depth direction (D), which is perpendicular to the plane of the longitudinal (L) and transversal (T) direction, may be substantially the same along the length of the tubes. The shape of the tubes provides for maximum exposure for the liquid to the UV-C light. The design of the tubes makes the flow turbulent due to the turns changing the flow direction of the liquid. In this way it can be assured that all the liquid within the tubes will be exposed to the UV-C light. Additionally, in this way the tubes can be arranged in the UV-treatment unit in a space saving manner and the UV-lights can be arranged to provide an even radiation on the tubes. Also, by providing a set of tubes in which the tubes are arranged in a parallel manner in the unit, a flexible system, in which the number of the tubes can be adapted to the required flow rates, is obtained. Additionally, the unit will be robust since treatment may continue even in case of breakage of one tube in the set.

As illustrated in Fig. 1a, the tube 110 has a continuous wave-shape along the length of the tube 110 and each tube is arranged in a generally vertical position, meaning that the inlet end 111 is arranged above the outlet end 112 in a vertical direction V. Each wave has a wave trough (TR) and a wave crest (CR). The wave shape may resemble a sinus-wave, or it may have sharper wave turns and resemble a zigzag-shape. According to a variant, the wave shape may resemble a serpentine shape. Thus, the wave shape in the present context includes the zigzag and serpentine shape. The wave shape in the present context contains bends, elbows or similar between two substantially straight tube portions. The bends or turns change the principal flow direction. Spiral wave shape is excluded. Other shapes having a continuous arch shape without intermediate straight portions may be excluded.

Each tube has an inner tube diameter between 3 mm and 15 mm. The tubes may not contain any sharp edges, even in case the shape resembles a zig-zag shape.

The tube portion extending between each trough and crest is in this context called intermediate wave portion (IW), which is substantially straight, and crosses a mean level (M) of the wave-shaped tube. The wavelength (λ) of each wave is defined between two neighboring crests or troughs. The amplitude (A) of each wave is defined between the crest (CR) or trough (TR) and the mean level (M). The higher the amplitude and the shorter the wavelength, the more turns and the more the liquid inside the tubes is decelerated. Thus, since the liquid flow is decelerated inside the tubes, the longer will the UV-exposure time for the liquid be. On the other hand, the lower the amplitude and the longer the wavelength, the less the liquid is decelerated in the tubes, and the shorter will the UV-exposure time be.

The amplitude of the waves can be from 0.1 to 2 times the wavelength to ensure sufficient exposure and process conditions. The wavelength and amplitude of the waves may be constant or may vary along the length of the tube. Each of the turns T1, T2, etc., contributes to the creation of turbulence in the liquid flow, which is critical in promoting effective UV-C transfer to the liquid. The present tube design provides an effective and space-saving manner to contribute to the turbulent flow, which may maximize the UV dose effect on the liquid.

According to a first variant (I), which is illustrated in Fig. 1b, the tubes 110 are arranged side by side in a tube frame structure 10 of the UV treatment unit 1 such that troughs TR and crests CR of the tubes 110 extend in a lying position, i.e. the troughs and crests of the tubes extend in a transversal direction T of the frame. In this way, a large surface area of the individual tubes 110 faces UV-lamps 210, also referred to as light sources, and can thus be exposed to UV-radiation. This way, a tube frame section with the set of tubes will have a more limited space requirement in the depth direction of the unit.

According to a second variant (II), which is illustrated in Fig. 3a-3c, the tubes 110 are arranged parallelly side by side in the tube frame structure 10 of the UV treatment unit 1 such that the troughs TR and crests CR of the tubes 110 extend in the depth direction (D) and thus face the UV-lamps 210. The number of the tubes 110 in this second variant can be more than in the first variant. In the illustrated example, the number of tubes in 20, but could be more or less depending on the dimensions of the unit and the tube frame 20.

Generally, the wave shaped tubes may be arranged such that the waves are in phase. In this way, the tubes may be packed side- by- side near each other. Therefore, it is possible to provide more tubes in a frame having the same area in the longitudinal and transversal direction and a larger volume of liquid can be exposed to UV-radiation. Alternatively, waves of neighboring tubes 110 with wave shape may be phase shifted. In this way, a larger surface area of the tubes can be brought close to the UV-lamps 210 at each side of the set of lamps in the unit.

The liquid tubes may be made of any type of standard material transparent to the UV-light emitted by the one or more light sources. The material should be accepted for use in connection with food products and may comprise or consist of polymeric materials or quartz glass or any other suitable transparent inert material suitable for food processing. The polymeric material may have in itself a filtering property, or may include a coating, which prevents wavelengths of more than 300 nm to pass through. Suitable tube materials include fluoropolymer-, polyethylene and/or polyurethane-based polymers and combinations thereof but are not limited thereto. The materials chosen should have high purity, low permeability, good chemical and light resistance, high transparency, among others.

The UV-treatment unit of the present invention comprises one or more UV-light sources, which are configured to emit light in a wavelength range between 180-300 nm. A broader wavelength range starting e.g. from 100 nm and ranging above 300 nm may be used, for example in combination with optical filters.

The UV-light sources, also referred to as UV-lamps, are arranged on at least one lateral side of the set of liquid tubes, which can be arranged in a lying or parallel position as described above in connection of variants (I) and (II) and shown in Fig. 2a and 3b.

The one or more light sources may be selected from mercury lamps (low and medium pressure), amalgam lamps, xenon arc lamps, excimer lamps, broadbandpulsed lamps, microwave UV Lamps and LED's (light emitting diodes). The light source, also referred to as lamp, usable in the UV-treatment unit of the present invention may be any of these light sources, as long as they can create light emission in the spectral wavelength area of 180 nm to 300 nm, which includes the ultraviolet C (UV-C) spectral wavelength area within a preferred wavelength range of 200-280 nm. When choosing a suitable lamp, performance factors that can be considered include for example expected life of the lamp, lamp output and lamp output over lamp life, the temperature of operation of the lamp, reflection, scattering refraction within the system, absorption values required and other general maintenance considerations, such as power supply and cost of the lamps to be used.

Monochromatic lamps may be preferable since they can emit light at a certain desired wavelength to a great extent. For example, monochromatic low pressure mercury lamps may provide UV-C radiation energy at a wavelength range of about 253 to 254 nm to a great extent, the range which is especially suitable for disinfection. However, the wall temperature of the lamps needs to be monitored to avoid wavelength shift to higher wave lengths. Low-pressure amalgam lamps, which have a long operational life, may alternatively be used.

In recent years, the use of light emitting diodes (LED) has become increasingly interesting due to the low energy need and temperatures during the treatment. LEDs are typically small (less than 1 mm) and several lamps can be used to provide a desired radiation pattern.

The UV-lamps usable in the present UV-treatment unit may operate at a lamp temperature between 0°C-120° C. The lower the operation temperature the lower is the heat transferred from the light source to the liquid food product. This may yield a lower requirement for cooling of the liquid food product after the UV-treatment. However, since the flow rate through the tubes is kept high, the risk for extensive heating of the liquid can be avoided even at higher operational lamp temperatures, whereby also conventional lamps, e.g. low pressure mercury lamps can be used.

Fig. 2a-2b and 3b-3c each shows a variant of a lamp arrangement in the UV-treatment unit 1 of the present invention. In the variant of Fig. 2a the cylindrical lamps 210 are arranged on both lateral sides of the set of tubes 210 such that they extend horizontally and in the transversal direction (T) of the treatment unit 1 in a respective lamp frame 20. In a variant shown in Fig. 2b, lamps 210 are arranged in a vertical position (V) in the lamp frame 20 on one lateral side of the tubes. In the shown sandwich structure with the set of tubes 110 being arranged in between the lamps, the lamps 210 are arranged and in a horizontal position in the lamp frame 20 on the opposing side of the tubes 210, and they thus extend in the transversal direction (T) in a similar manner as in Fig. 2a. In both variants, the lamps 210 are arranged in the lamp frame 20 side-by-side with a distance between the lamps in a horizontal or vertical direction depending on the respective lamp orientation. The distance between the lamps may be for example equal to the lamp diameter but may be more or less than the lamp diameter. In this way overheating of the lamps may be avoided. The number of lamps in the shown example is 12, but can be more or less, depending on the size of the treatment unit.

In Fig. 3c a further variant of a lamp frame 20 arrangement is shown. The lamps 210 are in this variant connected to the lamp frame 20 comprising two side walls 20' on the two transversal sides (T) of the set of tubes 210. The lamps 210 are arranged such that two lamps 210 are arranged in one row side by side on opposing sides of the tubes 110. The lamps extend in a transversal direction (T) through the set of tubes 110. Since the tubes 110 have a wave shape, the lamp rows are shifted to the left or right in respect to each other to follow the wave shape of the tubes 110. In this variant the wave shape of the tubes 110 should therefore be arranged in phase with each other. Alternatively, the side walls 20' into which the lamps 210 are connected, could be placed on opposite sides of the set of tubes 210 in the depth direction D as shown in Fig. 2a. In this variant it is possible to bring the lamps 210 in proximity of the tubes 110, which may provide a more efficient reduction of undesired microorganisms.

In all the above-mentioned lamp frame arrangements, the lamps 210 may be for example low pressure mercury lamps but could be any other suitable type.

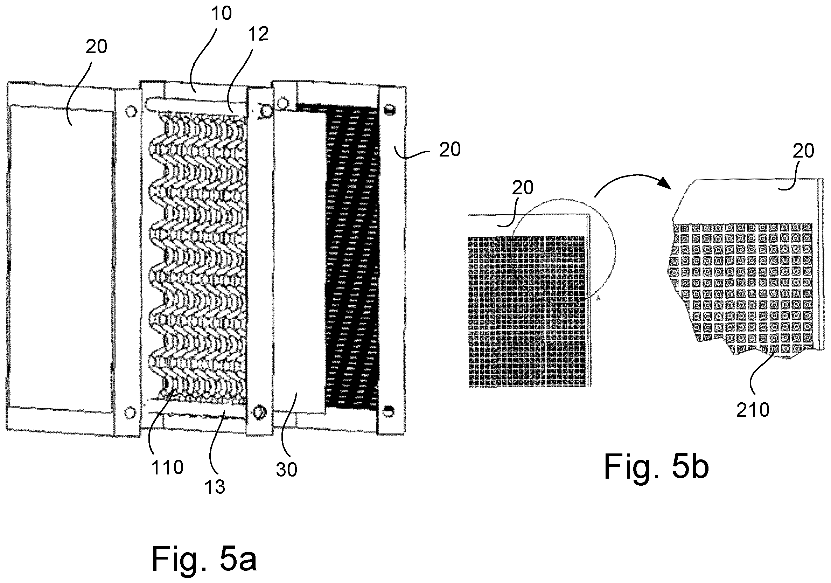

Alternatively, the lamps could be LEDs 210 as shown in a variant of Fig. 5a. As best shown in the enlarged portion view of Fig. 5b, the LEDs 210 are arranged on a plate 220 attached to the lamp frame 20. The LEDs can be arranged in a desired pattern, which may increase the flexibility and adaptation of the unit to different needs.

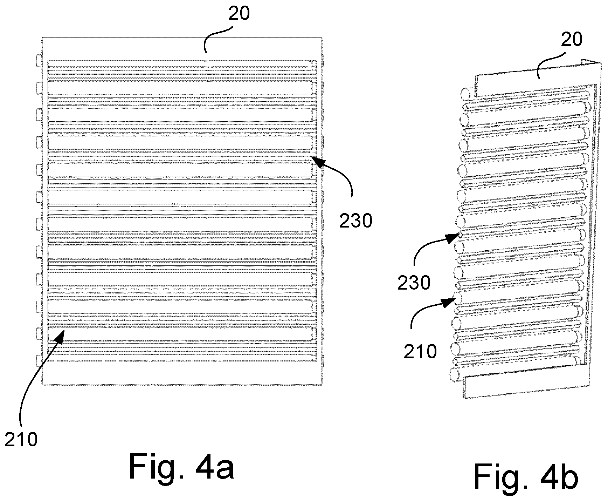

According to a further variant of the invention, it is possible to include reflectors in the UV-treatment unit. The reflectors are associated with the UV-lamps and may comprise or consist of reflective materials, e.g. aluminum or polymeric materials, such as polytetrafluoroethylene-containing materials. The reflective material may be for example a coating or a film. In Fig. 4a and 4b an example of a reflector is shown in the form of a rod 230 having a reflective coating. The rod has a square- shaped cross-section and is arranged in between two neighboring UV- lamps 210. The rod 230 is arranged in between the lamps so that corners of the square face the lamps and the set of tubes. In this way the reflective surface area towards the tubes may be increased. Additionally, using the reflector the radiation effectivity may be increased.

The UV-treatment unit may additionally comprise an optical filter 30 placed between the UV-light sources and the set of liquid tubes. The aim of the optical filter is to ensure that wavelengths outside the UV-C range are prevented to pass through while UV-C light can pass through. The filter 30 can be placed in association with the lamp frame 20 to cover the lamps on the side facing the set of tubes as shown in the Figures 2a, 2b, 3b and 5a.

The filter is thus configured to prevent wavelengths of more than 300 nm, or alternatively more than 280 nm to pass through the filter and is especially beneficial, when the UV-light sources do not emit monochromatic UV-C light. Different types of optical filters can be used including interference or bandpass filters, notch filters, or a combination of filters. The operational principle of the filter in the present disclosure can be based on translucence for particular wavelength ranges and the elimination of other frequencies due to interference. Bandpass filter allows passage of frequencies within a certain range and rejects frequencies outside that range. Notch filter allows passage of most frequencies but attenuates those in a specific range to very low levels. By using the optical filter, it is possible to block wavelengths above a desired wavelength, e.g. above 300 nm, whereby photo oxidation in the liquid food can be prevented, e.g. photo oxidation of riboflavin. Thereby off-flavors in the liquid food can avoided.

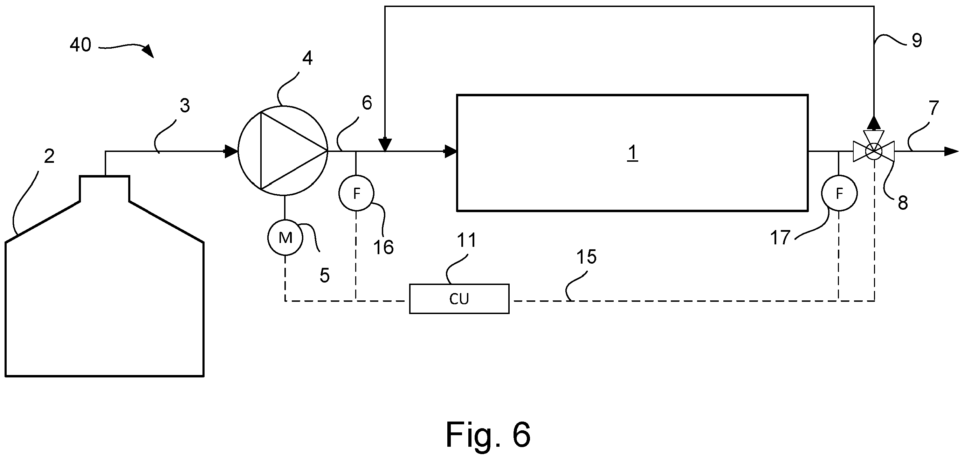

Fig. 6 further shows UV-treatment system 40 for reducing the amount of active or living micro-organisms in a liquid food product. The system comprises a liquid food tank 2 for untreated liquid food. The tank 2 may be a steel tank. The liquid food may be fresh unpasteurized food product, such as milk. The tank 2 is fluidly connected to a feed supply line 3 arranged between the tank 2 and a liquid supply pump 4. The liquid supply pump is adapted for a hygienic process, and may be a centrifugal pump, but is not limited thereto. The pump may comprise an electric motor 5, which can be electrically controllable, as described more in detail below. Alternatively, the pump can be manually controlled to provide a desired supply.

Downstream of the pump 4 a liquid inlet line 6 is fluidly connected to an inlet 12 of the UV-treatment unit 1 according to the present disclosure and as described above. Downstream of the UV-treatment unit 1 a liquid outlet line 7, which is connected to the outlet 13 of the UV-treatment unit is provided. The outlet line 7 may comprise a flow meter 17 downstream of the outlet 13 and upstream of a recirculation line 9, which is connected to the outlet line 7 and to the inlet line 6 downstream of the pump 4. A flowmeter 16 can be attached to the inlet line 6 upstream of the connection point, where the recirculation line is connected to the inlet line 6. The recirculation line comprises a flow valve 8, which may be manually controllable or electrically controllable flow valve. The flow valve 8 may also be connected to the outlet line 7 and may thus be a manually or electrically controllable three-way valve. In this way, the flow may be controlled both in the recirculation line 8 and in the outlet line 7. The pump 4 and the flow valve 8 may be manually controllable or automatically controllable by means of a control unit 11.

As further illustrated in Fig. 6, the system may further comprise the automatic control unit 11 configured to control the pump 4 and/or the flow valve 8 to adjust the flow through the UV-treatment unit 1. The electrical motor 5 of the pump may be connected to the control unit via a cable or via a wireless connection depicted by the dashed line 15. Similarly, the system may comprise a flow meter 16 upstream of the UV-treatment unit 1 and a flow meter 17 downstream of the UV-treatment unit and upstream or downstream of the flow valve 8, and each of these flowmeters and the control valve may be connected to the control unit 11 via a cable or via a wireless connection depicted by the dashed line 15.

The control unit 11 may be configured to control the flow valve 8 to provide recirculation of the liquid food product such that the flow rate through the unit is larger than the flow rate provided by the pump. For example, the flow meter detects the flow downstream of the pump and adjusts the pump speed to provide a flow rate of 3000 l/h. A set value for the flow rate downstream of the UV-treatment unit is set to 4000 l/h. This can be obtained by adjusting the flow rate by means of the flow valve 8. The control may alternatively be done manually, and the pump and the flow valve do not need to be electrically controllable.

The invention is not limited to the embodiment disclosed but may be varied and modified within the scope of the claims set out below. In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. UV-treatment unit (1) for reducing the amount of active or living micro-organisms in a liquid food product, the unit comprising:
- a liquid inlet (12) and a liquid outlet (13);
- at least one set of translucent liquid tubes (110), each tube comprising an inlet end (111) and an outlet end (112), the tubes being fluidly connected to the inlet and the outlet of the unit and defining a flow channel for the liquid, wherein each tube has a shape providing at least two turns (T1, T2) for the flow direction (FD) between the inlet end and the outlet end of the tube,
- one or more UV-light sources (210), which are configured to emit light in a wavelength range between 180-300 nm towards at least one side of the set of liquid tubes.
- optionally an optical filter (30) placed between the UV-light sources and the set of liquid tubes, the filter configured to prevent wavelengths of more than 300 nm to pass through the filter.

2. UV-treatment unit according to claim 1, wherein the UV-treatment unit comprises a tube frame (10) structure, which comprises or is fluidly connected to the liquid inlet and outlet and which is configured to support the at least one set of translucent liquid tubes in fluid connection with the inlet and the outlet.

3. UV-treatment unit according to claim 2, wherein the UV-treatment unit comprises a lamp frame (20) configured to support the UV-light sources (210).

4. UV-treatment unit according to claim 3, wherein the tube frame (10) structure and the lamp frame (20) structure are configured to be mountable and/or connectable to each other, and wherein the tube frame (10) structure is sandwiched between two lamp frame (20) structures, such that the UV-light sources emit light towards opposing sides of the liquid tubes (110).

5. UV-treatment unit according to any of the preceding claims, wherein each liquid tube (110) has a wave shape resembling a zigzag, sinus curve or serpentine shape, and wherein a wavelength and amplitude of the waves is constant or varies along the length of the tube.

6. UV-treatment unit according to claim 5, wherein the amplitude of the waves is from 0.1 to 2 times the wavelength.

7. UV-treatment unit according to any one of the preceding claims, wherein each tube has an inner tube diameter between 3 mm and 15 mm.

8. UV-treatment unit according to any of the preceding claims, wherein the UV-light sources are arranged in a parallel manner along the extension of the tubes between the inlet end and the outlet end of the tubes.

9. UV-treatment unit according to claim 8, wherein a reflective material is sandwiched between the UV-light sources.

10. UV-treatment unit according to any of the preceding claims, wherein the one or more light sources are selected from a mercury-vapor lamp, xenon lamp, laser and/or a light emitting diode (LED) or combinations thereof.

11. UV-treatment unit according to any of the preceding claims, wherein the one or more light sources are a low-pressure germicidal lamp, such as a low-pressure mercury-vapor lamp.

12. UV-treatment unit according to any of the preceding claims, wherein the one or more filters are optical filters selected from bandpass filters, notch filters, or a combination of both.

13. UV-treatment system (40) for reducing the amount of active or living microorganisms in a liquid food product comprising a liquid food tank (2) for untreated liquid food, a feed supply line (3) between the tank and a liquid supply pump (4), a liquid inlet line (6) fluidly connected to an inlet (12) of a UV-treatment unit according to any of the claims 1 to 12, a liquid outlet line (7) connected to an outlet of the UV-treatment unit (1), wherein a recirculation line (9) is connected to the outlet line (7) and to the inlet line (6) downstream of the pump (4).

14. UV-treatment system of claim 13, wherein the recirculation line (9) is fluidly connected to a manually or electrically controllable flow valve (8).

15. UV-treatment system according to claim 13 or 14, wherein system further comprises a control unit (11) configured to control the pump (4) and/or the flow valve (8) to adjust the flow through the UV-treatment unit (1).

16. UV-treatment system according to claim 15, wherein the control unit is configured to control the flow valve to provide recirculation of the liquid food product such that the flow rate through the unit is larger than the flow rate provided by the pump.

## Patentansprüche

1. UV-Behandlungseinheit (1) zum Verringern der Menge an aktiven oder lebenden Mikroorganismen in einem flüssigen Lebensmittelprodukt, wobei die Einheit Folgendes umfasst:
- einen Flüssigkeitseinlass (12) und einen Flüssigkeitsauslass (13);
- mindestens einen Satz lichtdurchlässiger Flüssigkeitsröhren (110), wobei jede Röhre ein Einlassende (111) und ein Auslassende (112) umfasst, wobei die Röhren in Fluidverbindung mit dem Einlass und dem Auslass der Einheit stehen und einen Durchflusskanal für die Flüssigkeit definieren, wobei jede Röhre eine Form aufweist, die mindestens zwei Windungen (T1, T2) für die Flussrichtung (FD) zwischen dem Einlassende und dem Auslassende der Röhre bereitstellt,
- eine oder mehrere UV-Lichtquellen (210), die konfiguriert sind, um Licht in einem Wellenlängenbereich zwischen 180 und 300 nm in Richtung mindestens einer Seite des Satzes von Flüssigkeitsröhren zu emittieren.
- optional, einen optischen Filter (30), der zwischen den UV-Lichtquellen und dem Satz von Flüssigkeitsröhren platziert ist, wobei der Filter konfiguriert ist, um zu verhindern, dass Wellenlängen von mehr als 300 nm durch den Filter gelangen.

2. UV-Behandlungseinheit nach Anspruch 1, wobei die UV-Behandlungseinheit eine Röhrenrahmenstruktur (10) umfasst, die den Flüssigkeitseinlass und -auslass umfasst oder mit diesen in Fluidverbindung steht und die konfiguriert ist, um den mindestens einen Satz lichtdurchlässiger Flüssigkeitsröhren in Fluidverbindung mit dem Einlass und dem Auslass zu stützen.

3. UV-Behandlungseinheit nach Anspruch 2, wobei die UV-Behandlungseinheit einen Lampenrahmen (20) umfasst, der konfiguriert ist, um die UV-Lichtquellen (210) zu stützen.

4. UV-Behandlungseinheit nach Anspruch 3, wobei die Röhrenrahmenstruktur (10) und die Lampenrahmenstruktur (20) so konfiguriert sind, dass sie aneinander montiert und/oder miteinander verbunden werden können, und wobei die Röhrenrahmenstruktur (10) sandwichartig zwischen zwei Lampenrahmenstrukturen (20) angeordnet ist, sodass die UV-Lichtquellen Licht in Richtung gegenüberliegender Seiten der Flüssigkeitsröhren (110) emittieren.

5. UV-Behandlungseinheit nach einem der vorhergehenden Ansprüche, wobei jede Flüssigkeitsröhre (110) eine Wellenform aufweist, die einer Zickzack-, Sinuskurven- oder Schlangenform ähnelt, und wobei eine Wellenlänge und Amplitude der Wellen konstant ist oder entlang der Länge der Röhre variiert.

6. UV-Behandlungseinheit nach Anspruch 5, wobei die Amplitude der Wellen das 0,1- bis 2-fache der Wellenlänge beträgt.

7. UV-Behandlungseinheit nach einem der vorhergehenden Ansprüche, wobei jede Röhre einen Röhreninnendurchmesser zwischen 3 mm und 15 mm aufweist.

8. UV-Behandlungseinheit nach einem der vorhergehenden Ansprüche, wobei die UV-Lichtquellen parallel entlang der Erstreckung der Röhren zwischen dem Einlassende und dem Auslassende der Röhren angeordnet sind.

9. UV-Behandlungseinheit nach Anspruch 8, wobei zwischen den UV-Lichtquellen ein reflektierendes Material sandwichartig angeordnet ist.

10. UV-Behandlungseinheit nach einem der vorhergehenden Ansprüche, wobei die eine oder die mehreren Lichtquellen aus einer Quecksilberdampflampe, einer Xenonlampe, einem Laser und/oder einer Licht emittierenden Diode (LED) oder Kombinationen davon ausgewählt sind.

11. UV-Behandlungseinheit nach einem der vorhergehenden Ansprüche, wobei die eine oder die mehreren Lichtquellen eine Niederdruck-EntkeimungsKeimtötungslampe, wie z. B. eine Niederdruck-Quecksilberdampflampe, sind.

12. UV-Behandlungseinheit nach einem der vorhergehenden Ansprüche, wobei es sich bei dem einen oder den mehreren Filtern um optische Filter handelt, die aus Bandpassfiltern, Kerbfiltern oder einer Kombination aus beiden ausgewählt sind.

13. UV-Behandlungssystem (40) zum Verringern der Menge an aktiven oder lebenden Mikroorganismen in einem flüssigen Lebensmittelprodukt, umfassend einen Flüssiglebensmitteltank (2) für unbehandelte flüssige Lebensmittel, eine Zufuhrleitung (3) zwischen dem Tank und einer Flüssigkeitszufuhrpumpe (4), eine Flüssigkeitseinlassleitung (6), die mit einem Einlass (12) einer UV-Behandlungseinheit nach einem der Ansprüche 1 bis 12 fluidisch verbunden ist, eine Flüssigkeitsauslassleitung (7), die mit einem Auslass der UV-Behandlungseinheit (1) verbunden ist, wobei stromabwärts der Pumpe (4) eine Umwälzungsleitung (9) mit der Auslassleitung (7) und mit der Einlassleitung (6) verbunden ist.

14. UV-Behandlungssystem nach Anspruch 13, wobei die Umwälzleitung (9) mit einem manuell oder elektrisch steuerbaren Durchflussventil (8) fluidisch verbunden ist.

15. UV-Behandlungssystem nach Anspruch 13 oder 14, wobei das System ferner eine Steuereinheit (11) umfasst, die konfiguriert ist, um die Pumpe (4) und/oder das Durchflussventil (8) zu steuern, um den Durchfluss durch die UV-Behandlungseinheit (1) anzupassen.

16. UV-Behandlungssystem nach Anspruch 15, wobei die Steuereinheit konfiguriert ist, um das Durchflussventil zu steuern, um eine Umwälzung des flüssigen Lebensmittelprodukts bereitzustellen, sodass die Durchflussrate durch die Einheit größer ist als die von der Pumpe bereitgestellte Durchflussrate.

## Revendications

1. Unité de traitement UV (1) permettant de réduire la quantité de micro-organismes actifs ou vivants dans un produit alimentaire liquide, l'unité comprenant :
- une entrée de liquide (12) et une sortie de liquide (13) ;
- au moins un ensemble de tubes de liquide translucides (110), chaque tube comprenant une extrémité d'entrée (111) et une extrémité de sortie (112), les tubes étant raccordés fluidiquement à l'entrée et à la sortie de l'unité et définissant un canal d'écoulement pour le liquide, dans laquelle chaque tube a une forme fournissant au moins deux tournants (T1, T2) pour la direction d'écoulement (FD) entre l'extrémité d'entrée et l'extrémité de sortie du tube,
- une ou plusieurs sources de lumière UV (210), qui sont configurées pour émettre de la lumière dans une gamme de longueurs d'onde de 180 à 300 nm vers au moins un côté de l'ensemble de tubes de liquide.
- optionnellement un filtre optique (30) placé entre les sources de lumière UV et l'ensemble de tubes de liquide, le filtre étant configuré pour empêcher des longueurs d'onde supérieures à 300 nm de passer à travers le filtre.

2. Unité de traitement UV selon la revendication 1, dans laquelle l'unité de traitement UV comprend une structure de cadre de tube (10) qui comprend ou est raccordée fluidiquement à l'entrée et la sortie de liquide et qui est configurée pour supporter l'au moins un ensemble de tubes de liquide translucides en connexion fluidique avec l'entrée et la sortie.

3. Unité de traitement UV selon la revendication 2, dans laquelle l'unité de traitement UV comprend un cadre de lampe (20) configuré pour supporter les sources de lumière UV (210).

4. Unité de traitement UV selon la revendication 3, dans laquelle la structure de cadre de tube (10) et la structure de cadre de lampe (20) sont configurées pour pouvoir être montées l'une sur l'autre et/ou raccordées l'une à l'autre, et dans laquelle la structure de support de tube (10) est intercalée entre deux structures de cadre de lampe (20), de sorte que les sources de lumière UV émettent de la lumière vers des côtés opposés des tubes de liquide (110).

5. Unité de traitement UV selon l'une quelconque des revendications précédentes, dans laquelle chaque tube de liquide (110) a une forme ondulée ressemblant à une forme de zigzag, de courbe sinusoïdale ou de serpentin, et dans laquelle une longueur d'onde et une amplitude des ondes est constante ou varie le long de la longueur du tube.

6. Unité de traitement UV selon la revendication 5, dans laquelle l'amplitude des ondes est de 0,1 à 2 fois la longueur d'onde.

7. Unité de traitement UV selon l'une quelconque des revendications précédentes, dans laquelle chaque tube a un diamètre intérieur de tube entre 3 mm et 15 mm.

8. Unité de traitement UV selon l'une quelconque des revendications précédentes, dans laquelle les sources de lumière UV sont disposées de manière parallèle le long de l'étendue des tubes entre l'extrémité d'entrée et l'extrémité de sortie des tubes.

9. Unité de traitement UV selon la revendication 8, dans laquelle un matériau réfléchissant est intercalé entre les sources de lumière UV

10. Unité de traitement UV selon l'une quelconque des revendications précédentes, dans laquelle les une ou plusieurs sources de lumière UV sont sélectionnées parmi une lampe à vapeur de mercure, une lampe à xénon, un laser et/ou une diode électroluminescente (DEL) ou des combinaisons de ceux-ci.

11. Unité de traitement UV selon l'une quelconque des revendications précédentes, dans laquelle les une ou plusieurs sources de lumière sont une lampe germicide à basse pression, telle qu'une lampe à vapeur de mercure à basse pression.

12. Unité de traitement UV selon l'une quelconque des revendications précédentes, dans laquelle les un ou plusieurs filtres sont de filtres optiques sélectionnés parmi des filtres à passe-bande, de filtres à encoches ou une combinaison des deux.

13. Système de traitement UV (40) pour réduire la quantité de micro-organismes actifs ou vivants dans un produit alimentaire liquide comprenant une cuve d'aliment liquide (2) pour un produit alimentaire non traité, une conduite d'alimentation (3) entre la cuve et une pompe d'alimentation de liquide (4), une conduite d'admission de liquide (6) raccordée fluidiquement à une entrée (12) d'une unité de traitement UV selon l'une quelconque des revendications 1 à 12, une conduite de sortie de liquide (7) raccordée à une sortie de l'unité de traitement UV (1), dans lequel une conduite de recirculation (9) est raccordée à la conduite de sortie (7) et à la conduite d'entrée (6) en aval de la pompe (4).

14. Système de traitement UV selon la revendication 13, dans lequel la conduite de recirculation (9) est connectée fluidiquement à une soupape de débit (8) commandable manuellement ou électriquement.

15. Système de traitement UV selon la revendication 13 ou 14, dans lequel le système comprend en outre une unité de commande (11) configurée pour commander la pompe (4) et/ou la soupape de débit (8) pour régler l'écoulement à travers l'unité de traitement UV (1).

16. Système de traitement UV selon la revendication 15, dans lequel l'unité de commande est configurée pour commander la soupape de débit pour produire une recirculation du produit alimentaire liquide de sorte que le débit à travers l'unité soit supérieur au débit fourni par la pompe.
